# EUROPEAN PATENT APPLICATION

(11) **EP 4 749 912 A1**
(43) Date of publication of application: **27.05.2026**
(21) Application number: 24844177.6
(22) Date of filing: 17.01.2024
(51) Int. Cl.: H02P 27/06

(54) **MOTOR CONTROLLER, POWERTRAIN, AND ELECTRIC VEHICLE**

(30) Priority: 21.07.2023 CN 202310909859
(71) Applicant: HUAWEI DIGITAL POWER TECHNOLOGIES CO., LTD., Shenzhen Guangdong 518043 (CN)
(72) Inventor: YANG, Lizhou, Shenzhen, Guangdong 518043 (CN); LI, Songtao, Shenzhen, Guangdong 518043 (CN); LU, Chunhong, Shenzhen, Guangdong 518043 (CN); TANG, Jie, Shenzhen, Guangdong 518043 (CN)
(74) Representative: Epping - Hermann - Fischer
(86) International application number: PCT/CN2024/072822
(87) International publication number: WO 2025/020477

(57) **Abstract**

This application provides a motor controller, a powertrain, and an electric vehicle, to resolve a problem of current impact on a power transistor that exists during startup of the motor controller and therefore improve powertrain efficiency and vehicle endurance. The motor controller provided in this application includes a control apparatus and an inverter circuit. The control apparatus is configured to receive a first torque signal, at least one second torque signal, and a third torque signal in sequence. In response to the third torque signal, the control apparatus outputs a startup signal and a third control signal in sequence. The startup signal is used to control the inverter circuit to generate a startup voltage, to avoid current impact that exists when the power transistor is turned on. The inverter circuit receives the third control signal and controls an induction motor to output a torque based on a torque value indicated by the third torque signal . According to the motor controller, the powertrain, and the electric vehicle provided in embodiments of this application, a startup speed of the motor controller can be increased, and current impact that exists during startup of the motor controller can be eliminated.

## Description

### TECHNICAL FIELD

This application relates to the field of electric vehicle power systems, and in particular, to a motor controller, a powertrain, and an electric vehicle.

### BACKGROUND

With the rapid development of electric vehicles, increasingly more attention is paid to power performance of the electric vehicles. In order to improve the power performance of the electric vehicles, four-wheel drive electric vehicles gradually become mainstream. The four-wheel drive electric vehicle includes a main drive powertrain and an auxiliary drive powertrain. The main drive powertrain includes a main drive motor and a main drive motor controller. The auxiliary drive powertrain includes an auxiliary drive motor and an auxiliary drive motor controller. During traveling of the four-wheel drive electric vehicle, the main drive motor and the auxiliary drive motor do not output torques simultaneously for a long time, and a torque requirement of an auxiliary drive powertrain motor assembly is a near-zero torque most of the time. However, there is impact and delay during restart of a power transistor of the auxiliary drive motor (motor) controller, which affects driving experience. The auxiliary drive motor therefore keeps operating in a torque output state, but the auxiliary drive motor in the torque output state and the auxiliary drive motor controller consume energy, which affects an endurance mileage of the four-wheel drive electric vehicle.

### SUMMARY

To resolve problems of current impact and startup delay of a motor controller in a startup process, this application provides a motor controller, a powertrain, and an electric vehicle.

According to a first aspect, this application provides a motor controller. The motor controller includes an inverter circuit and a control apparatus. The control apparatus controls the inverter circuit to output an alternating current to drive an induction motor. The control apparatus receives a first torque signal, at least one second torque signal, and a third torque signal in sequence. A torque value indicated by the first torque signal and a torque value indicated by the third torque signal are greater than a preset torque value. A torque value indicated by the at least one second torque signal is less than the preset torque value.

In response to receiving the first torque signal, the control apparatus outputs a first control signal to control the inverter circuit to drive the induction motor to generate a torque. In response to receiving the at least one second torque signal, the control apparatus outputs a second control signal to control the inverter circuit to stop driving the induction motor. In response to the third torque signal, the control apparatus outputs a startup signal and a third control signal in sequence. The startup signal is used to control the inverter circuit to generate a startup voltage, and the third control signal is used to control the inverter circuit to generate a torque for driving the induction motor.

During traveling of an electric vehicle, the first torque signal and the third torque signal are used to cause the motor controller to drive the induction motor to output the torques. The second torque signal indicates the motor controller to control the induction motor to output a zero torque. For example, during traveling of the electric vehicle, the control apparatus first receives the first torque signal, and outputs the first control signal. The first control signal causes the inverter circuit to generate a drive current to drive the induction motor to output the torque. Subsequently, the control apparatus receives the second torque signal, and outputs the second control signal. The second control signal causes the inverter circuit to stop driving the induction motor, and the induction motor outputs a zero torque. In this case, although the motor controller stops driving the induction motor, a magnetic field of a rotor of the induction motor does not immediately disappear, and an induced voltage is generated on a stator winding of the induction motor due to a remaining magnetic field of the rotor. Further, the control apparatus receives the third torque signal. In this case, because power transistors of the inverter circuit are already turned off, the inverter circuit needs to be restarted. If the inverter circuit is directly started, there is a voltage difference between an output voltage of midpoints of power transistor bridge arms of the inverter circuit and an induced voltage of the winding. This causes an impulse current between the stator winding of the induction motor and the midpoints of the power transistor bridge arms of the inverter circuit, which affects normal operation of the power transistors of the inverter circuit. Besides, it takes some time to directly start the inverter circuit, and consequently, there is delay in a startup process. Therefore, the control apparatus first outputs the startup signal to control the inverter circuit to generate the startup voltage. The startup voltage can offset the induced voltage on the stator winding of the induction motor. Under the action of the startup voltage, an impulse current is weakened. There is no longer impact in the startup process of the inverter circuit, and a startup speed is greatly increased. Then, the control apparatus outputs the third control signal, and the inverter circuit is started and drives the induction motor to output the torque. Therefore, according to the motor controller provided in this application, power performance and driving comfort of the electric vehicle are improved.

In an implementation of the first aspect, a torque that the induction motor is driven, by the inverter circuit in a process in which the motor controller outputs the startup voltage, to generate is less than the preset torque value.

In an implementation of the first aspect, duration of the startup signal is less than duration of the first control signal and duration of the third control signal. To ensure that the startup process is fast enough, the duration of the startup signal needs to be short enough. In this application, the duration of the startup signal is set to be less than the duration of the first control signal and the duration of the third control signal, to increase a startup speed of the motor controller.

In an implementation of the first aspect, an interval between the first control signal and the third control signal is greater than an interval between the first torque signal and the third torque signal. When receiving the third torque signal, the control apparatus does not immediately output the third control signal, but first outputs the startup signal and then outputs the third control signal. Therefore, the duration of the startup signal is less than the duration of the first control signal and the duration of the third control signal.

In an implementation of the first aspect, the control apparatus is configured to receive the first torque signal, the at least one second torque signal, and the third torque signal that are output in sequence by the vehicle control unit. At least one of the vehicle control unit or the control apparatus is configured to detect a vehicle speed.

In response to that the vehicle speed is less than a preset speed during reception of the at least one second torque signal, the control apparatus controls the inverter circuit to re-drive the induction motor to generate a torque.

In an implementation of the first aspect, the inverter circuit includes a plurality of power transistor bridge arms. The induction motor includes a plurality of phase windings. Each power transistor bridge arm includes an upper-bridge-arm power transistor and a lower-bridge-arm power transistor. Two ends of each power transistor bridge arm are configured to receive a direct current. A bridge arm midpoint of each power transistor bridge arm is configured to connect to one phase winding of the induction motor.

In response to the first control signal, the bridge arm midpoints of the plurality of power transistor bridge arms of the inverter circuit output an alternating current to drive the induction motor to generate a first torque. In response to the second control signal, upper-bridge-arm power transistors and lower-bridge-arm power transistors of the plurality of power transistor bridge arms of the inverter circuit are turned off. In response to the startup signal, the startup voltage is generated at the bridge arm midpoints of plurality of power transistor bridge arms of the inverter circuit. A difference between the startup voltage and a winding voltage that is of the induction motor and that exists when the control apparatus receives the third torque signal is less than or equal to a preset threshold. In response to the third control signal, the inverter circuit outputs an alternating current to drive the induction motor to generate a third torque.

To enable the startup voltage to offset the induced voltage generated on the stator winding of the induction motor due to the remaining magnetic field of the rotor, the difference between the startup voltage and the winding voltage that is of the induction motor and that exists when the control apparatus receives the third torque signal is less than or equal to the preset threshold. Therefore, it can be ensured that the startup voltage offsets the induced voltage.

In an implementation of the first aspect, the inverter circuit includes three power transistor bridge arms. The induction motor includes three phase windings. A difference between a phase of a startup voltage of bridge arm midpoints of the three power transistor bridge arms and a phase of a voltage that is of the three phase windings of the induction motor and that exists when the control apparatus receives the third torque signal, and a difference between an amplitude of the startup voltage of the bridge arm midpoints of the three power transistor bridge arms and an amplitude of the voltage that is of the three phase windings of the induction motor and that exists when the control apparatus receives the third torque signal each are less than or equal to the preset threshold.

In an implementation of the first aspect, the control apparatus includes a storage unit and a drive unit. The storage apparatus is configured to store a plurality of torque values and a plurality of current parameters of the induction motor. The plurality of torque values correspond to the plurality of current parameters respectively. The current parameter includes an amplitude and a phase angle of a three-phase alternating current. The drive unit is configured to adjust a duty cycle and a frequency of the first control signal based on a current parameter corresponding to the torque value indicated by the first torque signal. The drive unit is configured to adjust a duty cycle and a frequency of the third control signal based on a current parameter corresponding to the torque value indicated by the third torque signal.

In an implementation of the first aspect, the drive unit is configured to adjust a frequency and a duty cycle of the startup signal based on a current that is of the induction motor and that exists when the control apparatus stops outputting the first control signal, turn-off duration of the power transistor in the inverter circuit, and a rotation speed that is of the induction motor and that exists when the control apparatus receives the third torque signal.

In an implementation of the first aspect, the motor controller is configured to connect to a motor rotation speed detector. The motion rotation speed detector is configured to detect a rotation speed of the induction motor. The motor controller calculates the vehicle speed of the vehicle based on the rotation speed of the induction motor.

According to a second aspect, this application provides a powertrain. The powertrain includes an induction motor and a motor controller. The induction motor is configured to drive wheels or rotate with the wheels. The motor controller is configured to receive torque signals. The torque signals include a first torque signal, at least one second torque signal, and a third torque signal that are in sequence and spaced apart. A torque value indicated by the first torque signal and a torque value indicated by the third torque signal are greater than a preset torque value. A torque value indicated by the at least one second torque signal is less than or equal to the preset torque value.

In response to the first torque signal, the motor controller is configured to drive the induction motor to drive the wheels. In response to the at least one second torque signal, the motor controller stops driving the induction motor, and the induction motor rotates with the wheels. In response to receiving the third torque signal in a process in which the induction motor rotates with the wheels, the motor controller first outputs a startup voltage, and then drives the induction motor to drive the wheels.

According to the powertrain provided in this application, a torque may be output based on a torque value indicated by a torque signal. In addition, when the powertrain needs to be restarted, a startup voltage may be first generated, and then a drive current for driving the induction motor may be generated, to avoid current impact and startup delay in a startup process of the motor controller. According to the powertrain provided in this application, the startup process of the motor controller can be accelerated, so that power performance of an electric vehicle is improved. In addition, the current impact in the startup process of the motor controller can be avoided, so that driving comfort of the electric vehicle is improved.

In an implementation of the second aspect, the induction motor rotates with the wheels in a process in which the motor controller outputs the startup voltage. In the process in which the motor controller outputs the startup voltage , the motor controller still does not drive the induction motor to generate a torque. Therefore, the induction motor rotates with the wheels in this case.

In an implementation of the second aspect, the induction motor includes a rotation speed detection module. The rotation speed detection module is configured to detect a rotation speed of the induction motor. The motor controller is configured to adjust the startup voltage based on a rotation speed that is of the induction motor and that exists when the control apparatus receives the third torque signal.

According to a third aspect, this application provides a vehicle. The vehicle includes wheels, a vehicle control unit, and the powertrain according to the second aspect. The vehicle control unit or the motor controller is configured to detect a vehicle speed of the vehicle. The motor controller responds to at least one second torque signal and a case in which the vehicle speed is greater than a preset speed. In this case, the motor controller stops driving the induction motor, and the induction motor rotates with the wheels. The motor controller responds to the at least one second torque signal and a case in which the vehicle speed is less than the preset speed. In this case, the motor controller drives the induction motor to output a torque.

Although a control apparatus receives the second torque signal, if the vehicle speed of the electric vehicle is less than a preset vehicle speed and power transistors of an inverter circuit are in an off state in this case, there is a gear rattle from a gear of the powertrain, and consequently, the NVH performance of the electric vehicle is affected. The control apparatus responds to the at least one second torque signal and the case in which the vehicle speed is less than the preset speed. In this case, the motor controller drives the induction motor to output a torque, to avoid the gear rattle from the powertrain during traveling of the electric vehicle. As a result, the NVH performance and driving comfort of the electric vehicle are improved. The control apparatus responds to the at least one second torque signal and the case in which the vehicle speed is greater than the preset speed. In this case, the motor controller stops driving the induction motor, and the induction motor rotates with the wheels. According to the electric vehicle provided in this application, the NVH performance and the driving comfort of the electric vehicle can be improved.

According to a fourth aspect, this application provides a control method for controlling an inverter circuit of a motor controller. The inverter circuit is configured to drive an induction motor. The control method includes:
receiving torque signals, where the torque signals include a first torque signal, at least one second torque signal, and a third torque signal that are in sequence and spaced apart, a torque value indicated by the first torque signal and a torque value indicated by the third torque signal are greater than a preset torque value, and a torque value indicated by the at least one second torque signal is less than the preset torque value;
outputting a first control signal in response to the first torque signal, where the first control signal controls the inverter circuit to drive the induction motor to generate a torque;
outputting a second control signal in response to the at least one second torque signal, where the second control signal controls the inverter circuit to stop driving the induction motor; and
in response to the third torque signal, outputting a startup signal and a third control signal in sequence, where the startup signal is used to control a startup voltage of the inverter circuit, and the third control signal is used to control the inverter circuit to drive the induction motor to generate a torque.

According to the method for controlling the inverter circuit of the motor controller provided in this application, when the inverter circuit is started, the startup signal is first output to control the inverter circuit to generate the startup voltage. The startup voltage can offset an induced voltage on a stator winding of the induction motor. Under the action of the startup voltage, an impulse current is weakened. There is no longer impact in a startup process of the inverter circuit, and a startup speed is greatly increased. Then, the third control signal is output, and the inverter circuit is started and drives the induction motor to output the torque. Therefore, according to the method for controlling the inverter circuit of the motor controller provided in this application, power performance and driving comfort of an electric vehicle are improved.

In an implementation of the fourth aspect, a torque that the induction motor is driven, by the inverter circuit in a process in which the inverter circuit outputs the startup voltage, to generate is less than the preset torque value.

In an implementation of the fourth aspect, duration of the startup signal is less than duration of the first control signal and duration of the third control signal. To ensure that the startup process is fast enough, the duration of the startup signal needs to be short enough. According to the control method in this application, the duration of the startup signal is set to be less than the duration of the first control signal and the duration of the third control signal, to increase a startup speed of the motor controller.

In an implementation of the fourth aspect, an interval between the first control signal and the third control signal is greater than an interval between the first torque signal and the third torque signal. When the third torque signal is received, the third control signal is not immediately output, but the startup signal is first output and then the third control signal is output. Therefore, the duration of the startup signal is less than the duration of the first control signal and the duration of the third control signal.

### BRIEF DESCRIPTION OF DRAWINGS

FIG. 1 is a diagram of an electric vehicle according to an embodiment of this application;
FIG. 2 is a diagram of a powertrain according to an embodiment of this application;
FIG. 3 is a diagram of a motor controller according to an embodiment of this application;
FIG. 4 is a diagram of operation of a motor controller according to an embodiment of this application;
FIG. 5 is a diagram of operation of a vehicle control unit according to an embodiment of this application;
FIG. 6 is a diagram of operation of a motor controller according to an embodiment of this application;
FIG. 7 is a diagram of operation of a motor controller according to an embodiment of this application;
FIG. 8 is a diagram of another motor controller according to an embodiment of this application;
FIG. 9 is a diagram of another motor controller according to an embodiment of this application; and
FIG. 10 is a diagram of another electric vehicle according to an embodiment of this application.

### DESCRIPTION OF EMBODIMENTS

The following describes technical solutions in embodiments of this application with reference to accompanying drawings in embodiments. Before specific content of the technical solutions is described, terms used in this application are first briefly described.

The words "first, second, third, or the like" or similar terms such as module A, module B, and module C in the specification and claims are only used to distinguish between similar objects, and do not represent a specific order for objects. It can be understood that a specific order or sequence may be exchanged if allowed, so that embodiments of this application described herein can be implemented in an order other than that illustrated or described herein.

The term "include" used in the specification and claims should not be construed as being limited to the content listed below; and the term does not exclude other elements or steps. Accordingly, it should be interpreted as specifying the presence of the feature, whole, step or component mentioned, but does not preclude the presence or addition of one or more other features, wholes, steps or components and groups thereof. Therefore, the expression "device including apparatuses A and B" should not be limited to device consisting of only components A and B.

"One embodiment" or "an embodiment" mentioned in this specification means that a specific feature, structure, or characteristic described in combination with this embodiment is included in at least one embodiment of this application. Therefore, the term "in one embodiment" or "in an embodiment" appearing throughout this specification does not necessarily refer to a same embodiment, but may refer to a same embodiment. Further, in one or more embodiments, the particular features, structures, or characteristics can be combined in any suitable manner, as will be apparent to those of ordinary skill in the art from the present disclosure.

Unless otherwise defined, all technical and scientific terms used in this specification have same meanings as those usually understood by a person skilled in the art of this application. In case of any inconsistency, the meaning described in this specification or the meaning obtained based on the content recorded in this specification shall be used. In addition, the terms used in this specification are merely for the purpose of describing embodiments of this application, but are not intended to limit this application.

An electric vehicle includes a power battery and a powertrain. The powertrain includes a drive motor and a motor controller. During traveling of the electric vehicle, the motor controller converts a direct current from the power battery into an alternating current to supply power to the drive motor, and the drive motor is configured to drive wheels of the electric vehicle to enable the electric vehicle to move. In order to improve power performance of electric vehicles, many electric vehicles are all provided with a main drive powertrain and an auxiliary drive powertrain to jointly drive the electric vehicle. Each powertrain is configured to drive two wheels of the electric vehicle. During traveling of the electric vehicle, the main drive powertrain performs a main driving function, and the auxiliary drive powertrain works with the main drive powertrain to output power. The main drive powertrain and the auxiliary drive powertrain work together to drive the electric vehicle, so that the power performance of the electric vehicle can be improved, and two motors both operate in a high-efficiency working range.

An operating status of the auxiliary drive powertrain includes a drive state and a freewheeling state.

The auxiliary drive powertrain is in the drive state. In this case, the auxiliary drive powertrain is configured to drive wheels. Specifically, when the auxiliary drive powertrain operates in the drive state, an auxiliary drive motor controller is configured to output a three-phase alternating current to an auxiliary drive motor, to drive the auxiliary drive motor to output a torque. When the auxiliary drive powertrain operates in the drive state, the auxiliary drive powertrain and the main drive powertrain jointly drive the electric vehicle.

The auxiliary drive powertrain is in the freewheeling state. In this case, the auxiliary drive motor rotates with rotation of the wheels and does not output a torque to the wheels, and the auxiliary drive motor controller does not output a three-phase alternating current for driving the auxiliary drive motor. When the auxiliary drive powertrain operates in the freewheeling state, the auxiliary drive powertrain does not output a torque, and the main drive powertrain drives the electric vehicle alone.

During traveling of the electric vehicle, the auxiliary drive motor works with the main drive motor to drive the wheels of the electric vehicle. The auxiliary drive motor controller is configured to control torque output of the auxiliary drive motor, and the auxiliary drive motor controller includes an inverter circuit including a plurality of power transistors. The auxiliary drive powertrain is in the drive state. In this case, the plurality of power transistors of the inverter circuit are alternately turned on, and the inverter circuit is configured to convert, to an alternating current, a direct current from the power battery, to drive the auxiliary drive motor to output a torque. The auxiliary drive powertrain is in the freewheeling state. In this case, the plurality of power transistors of the inverter circuit are turned off, the inverter circuit does not output a drive current, and the auxiliary drive motor does not output a torque.

The auxiliary drive motor of the electric vehicle is an induction motor. A working principle of the induction motor is as follows: The auxiliary drive motor controller outputs an alternating current to a stator winding, so that a stator generates a rotating magnetic field. An induced current is generated in a rotor winding under the action of the rotating magnetic field of the stator. The induced current for a rotor further causes the rotor to generate a magnetic field. The magnetic field of the stator and the magnetic field of the rotor interact with each other. As a result, the stator is subject to a force and outputs a driving force. When the auxiliary drive motor controller stops outputting the alternating current to the stator, the magnetic field of the rotor does not immediately disappear, but gradually decays. During decay of the magnetic field of the rotor, an induced voltage is generated on the stator winding under the action of a remaining magnetic field of the rotor. If the auxiliary drive powertrain needs to be restarted before the magnetic field of the rotor completely disappears, the power transistor of the inverter circuit of the auxiliary drive motor controller changes from an off state to an on state in a process in which the auxiliary drive powertrain switches from the freewheeling state in which a torque is not output to the drive state in which a torque is output. After the power transistor of the inverter circuit is turned on, due to the induced voltage on the stator winding, there is a voltage difference between the stator winding and the power transistor of the inverter circuit of the auxiliary drive motor controller, and therefore an induced current flowing from the stator winding to the power transistor is generated. The induced current has impact on the power transistor of the inverter circuit of the auxiliary drive motor controller. This affects a startup speed of the auxiliary drive motor controller and safety of the power transistor. To avoid current impact and startup delay that are caused by sudden startup of the power transistor, the auxiliary drive motor controller may be kept in a working state. However, continuously outputting a torque by the auxiliary drive motor causes the auxiliary drive motor controller and the auxiliary drive motor to keep operating and consume energy. This affects an endurance mileage of the electric vehicle.

To resolve the foregoing problems, embodiments of this application provide an electric vehicle, a powertrain, and a motor controller. In a process in which the powertrain provided in embodiments of this application switches from a freewheeling state to a drive state, to avoid impact and delay that are caused in a process in which a power transistor of an auxiliary drive motor controller switches from an off state to an on state, the motor controller provided in embodiments of this application first generates a startup voltage to offset an induced voltage, and then controls an induction motor to generate a torque. As a result, an induced current is not generated between a stator winding of the induction motor and an inverter circuit of the motor controller, and safety and a startup speed of the motor controller are improved.

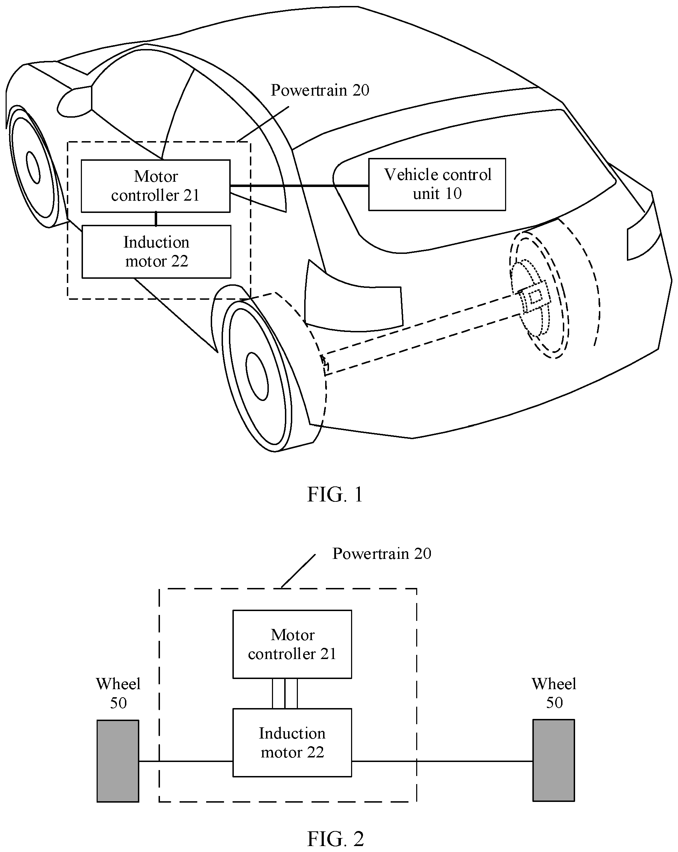

FIG. 1 is a diagram of an electric vehicle 10 according to an embodiment of this application. As shown in FIG. 1, the electric vehicle 10 includes a powertrain 20 and a vehicle control unit 30. The vehicle control unit 30 has a torque control function. To be specific, the vehicle control unit 30 controls the powertrain 20 to output an appropriate torque based on a traveling parameter of the electric vehicle 10 and a driving intention of a driver. FIG. 2 is a diagram of a powertrain 20 according to an embodiment of this application. As shown in FIG. 2, the powertrain 20 includes a motor controller 21 and an induction motor 22. The induction motor 22 drives wheels 50 connected to the electric vehicle 01.

In an embodiment, the powertrain 20 is an auxiliary drive powertrain, and an operating status of the powertrain 20 includes a drive state and a freewheeling state.

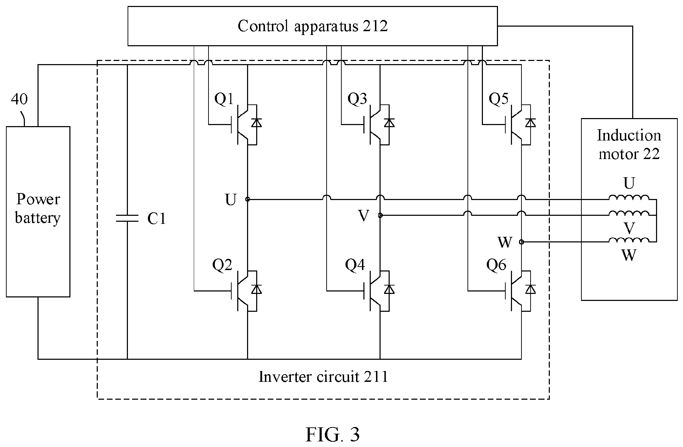

FIG. 3 is a diagram of a motor controller 21 according to an embodiment of this application. As shown in FIG. 3, the motor controller 21 is connected to a power battery 40 and the induction motor 22. During traveling of the electric vehicle 10, the motor controller 21 is configured to convert a direct current from the power battery 40 into an alternating current to supply power to the drive motor 22. The motor controller 21 includes an inverter circuit 211 and a control apparatus 212. The inverter circuit 211 includes a plurality of power transistor bridge arms, and the induction motor 22 includes a plurality of phase windings. Each power transistor bridge arm includes an upper-bridge-arm power transistor and a lower-bridge-arm power transistor, and two ends of each power transistor bridge arm are configured to receive the direct current. A bridge arm midpoint of each power transistor bridge arm is configured to connect to one phase winding of the induction motor 22.

A power transistor of the inverter circuit 211 in embodiments of this application may be a MOSFET, a SIC MOSFET, an IGBT, or another type of power component. This is not limited herein.

In an embodiment, as shown in FIG. 3, the inverter circuit 211 includes three power transistor bridge arms, and the induction motor 22 includes three phase windings. The three phase windings of the induction motor 22 are a U-phase winding, a V-phase winding, and a W-phase winding. The three power transistor bridge arms of the inverter circuit 211 are a U-phase bridge arm, a V-phase bridge arm, and a W-phase bridge arm. A bridge arm midpoint of the U-phase bridge arm, a bridge arm midpoint of the V-phase bridge arm, and a bridge arm midpoint of the W-phase bridge arm are respectively connected to the U-phase winding, the V-phase winding, and the W-phase winding. The inverter circuit 211 is configured to convert the direct current from the power battery 40 into a three-phase alternating current to supply power to the induction motor 22.

In another embodiment, the inverter circuit 211 includes six power transistor bridge arms, and the induction motor 22 includes six phase windings.

Bridge arm midpoints of the six power transistor bridge arms of the inverter circuit 211 are respectively connected to the six phase windings of the induction motor 22.

In an embodiment, the motor controller 21 includes a rotation speed detection module 215. The rotation speed detection module 2215 is configured to detect a rotation speed of the induction motor 22. The motor controller 21 or the vehicle control unit 30 calculates a vehicle speed of the electric vehicle 10 based on the rotation speed of the induction motor 22. Specifically, the induction motor 22 is provided with a motor rotation speed sensor 221. The motor rotation speed sensor 221 is configured to monitor the rotation speed of the induction motor 22. The motor controller 21 is provided with a rotation speed monitoring module 215. The rotation speed monitoring module 215 is configured to receive a motor rotation speed signal from the rotation speed sensor 221. The motor controller 21 or the vehicle control unit 30 is configured to receive the rotation speed signal from the motor rotation speed sensor 221 and calculate the vehicle speed of the electric vehicle 10 based on the rotation speed of the induction motor 22.

Working modes of the motor controller 21 provided in embodiments of this application include a torque mode, a transistor turn-off and freewheeling mode, and a low-excitation power-saving mode.

The motor controller 21 operates in the torque mode. In this case, the motor controller 21 receives a torque signal from the vehicle control unit 10, and the inverter circuit 211 outputs a three-phase alternating current to control the induction motor 22 to output a torque based on a torque value indicated by the torque signal. The motor controller 21 operates in the transistor turn-off and freewheeling mode. In this case, power transistors of the inverter circuit 211 are all turned off, the motor controller 21 does not output a drive current, the induction motor 22 does not output a torque, and the induction motor 22 rotates with the wheels 50. The motor controller 21 operates in the low-excitation power-saving mode. In this case, a torque instruction is a cogging torque, so that an excitation current is reduced.

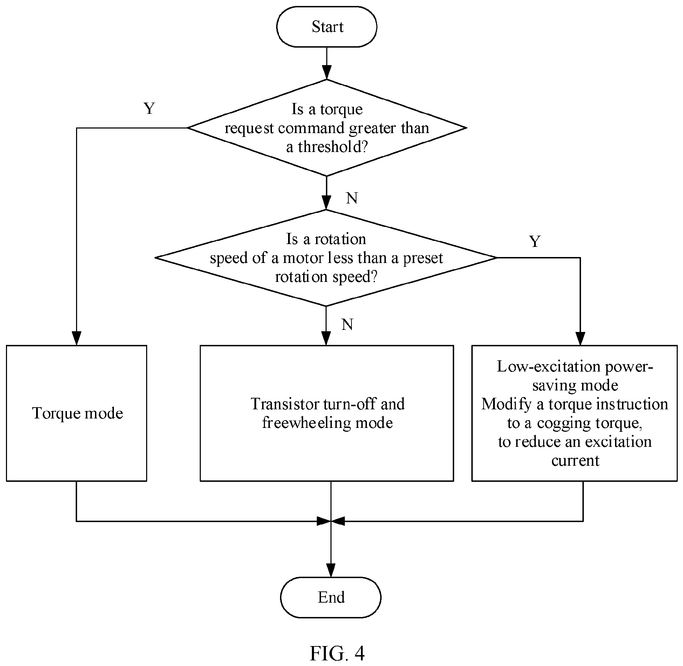

Specifically, as shown in FIG. 4, the motor controller 21 chooses, based on the torque value indicated by the torque signal from the vehicle control unit 30 and the rotation speed of the motor, to operate in the torque mode, the transistor turn-off and freewheeling mode, or the low-excitation power-saving mode.

The motor controller 21 operates in the torque mode in response to that the torque value indicated by the torque signal is greater than a preset torque value. The motor controller 21 is configured to convert a direct current from the power battery 40 into an alternating current to drive the induction motor 22. The induction motor 22 outputs the torque value indicated by the torque signal.

In response to that the torque value indicated by the torque signal is less than or equal to the preset torque value and the rotation speed of the induction motor 22 is greater than a preset rotation speed, the motor controller 21 operates in the transistor turn-off and freewheeling mode. The power transistors of the motor controller 21 are turned off, and the motor controller 21 stops driving the induction motor 22. The induction motor 22 rotates with rotation of the wheels 50.

In response to that the torque value indicated by the torque signal is less than or equal to the preset torque value and the rotation speed of the induction motor 22 is less than or equal to the preset rotation speed, the motor controller 21 operates in the low-excitation power-saving mode. When the rotation speed of the induction motor 22 is less than the preset rotation speed, if the power transistors of the motor controller 21 are turned off, during rotation of a rotor of the induction motor 22, there is a gear rattle from a gear of the powertrain 20, and consequently, NVH performance of the electric vehicle 10 is degraded. Therefore, in response to that the torque value indicated by the torque signal is less than or equal to the preset torque value and the rotation speed of the induction motor 22 is less than or equal to the preset rotation speed, the motor controller 21 operates in the low-excitation power-saving mode. An amplitude of a drive current output by the motor controller 21 is less than a preset amplitude.

The motor controller 21 provided in embodiments of this application may choose, based on the torque value indicated by the torque signal and the rotation speed of the motor, to operate in different modes, to control the induction motor to output different torques. According to the motor controller 21 provided in embodiments of this application, power performance and energy utilization efficiency of the electric vehicle can be improved.

The vehicle control unit 30 provided in embodiments of this application is configured to output a torque signal according to a torque requirement of the electric vehicle 10. The control apparatus 212 is configured to receive the torque signal and output a control signal based on a torque value indicated by the torque signal. The inverter circuit 211 is configured to receive the control signal and output a drive current to drive the induction motor 22 to output the torque value indicated by the torque signal.

During traveling of the electric vehicle 10, the vehicle control unit 30 outputs a first torque signal, a second torque signal, and a third torque signal in sequence. The first torque signal, the second torque signal, and the third torque signal indicate different torque values. The torque value indicated by the first torque signal and the torque value indicated by the third torque signal are greater than the preset torque value, and the torque value indicated by the second torque signal is less than or equal to the preset torque value.

The first torque signal and the third torque signal may be understood as normal torque output signals, and the first torque signal and the third torque signal are used to control the powertrain 20 to output torques for driving the electric vehicle 10. The second torque signal may be understood as a zero torque output signal, and the second torque signal is used to control the powertrain 20 to output a zero torque. During traveling of the electric vehicle 10, to cause the powertrain 20 to be in the freewheeling state in which a torque is not output, the vehicle control unit 30 outputs the second torque signal. The torque value indicated by the second torque signal is a torque value of zero or an extremely small torque value less than the preset torque value.

For example, the preset torque value is 0.5 N·m. If the torque value indicated by the torque signal is less than or equal to 0.5 N·m, the powertrain 20 is in the freewheeling state, and the induction motor 22 does not output the torque.

In response to the first torque signal, the motor controller 21 drives the induction motor 22 to output a torque to drive the wheels 50. Specifically, the control apparatus 212 receives the first torque signal and outputs a first control signal. The inverter circuit 221 responds to the first control signal, and bridge arm midpoints of the plurality of power transistor bridge arms of the inverter circuit 211 output an alternating current to drive the induction motor 22 to generate a first torque. A torque value corresponding to the first torque is the torque value indicated by the first torque signal.

In response to the second torque signal, the motor controller 21 stops driving the induction motor 22, and the induction motor 22 rotates with the wheels 50. Specifically, the control apparatus 212 receives the second torque signal and outputs a second control signal. The inverter circuit 221 responds to the second control signal, and upper-bridge-arm power transistors and lower-bridge-arm power transistors of the plurality of power transistor bridge arms of the inverter circuit 211 are turned off. The motor controller 21 stops driving the induction motor 22.

In response to receiving the third torque signal in a process in which the induction motor 22 rotates with the wheels 50, the motor controller 21 first outputs a startup voltage, and then drives the induction motor 22 to drive the wheels. Specifically, the control apparatus 212 receives the third torque signal, and outputs a startup signal and a third control signal in sequence. The startup signal is used to control the inverter circuit 211 to generate the startup voltage. After generating the startup voltage, the inverter circuit 211 receives the third control signal and drives the induction motor 22 to output a torque based on the value indicated by the third torque signal.

During traveling of the electric vehicle, the first torque signal and the third torque signal are used to cause the motor controller 21 to drive the induction motor 22 to output the torques. The second torque signal indicates the motor controller 21 to control the induction motor 22 to output a zero torque. For example, during traveling of the electric vehicle 10, the electric vehicle 10 needs the powertrain 20 to output a torque to drive the wheels 40. The control apparatus 212 first receives the first torque signal, and outputs the first control signal. The first control signal causes the inverter circuit 211 to generate a drive current to drive the induction motor 22 to output a torque. The electric vehicle 10 does not need the powertrain 20 to output a torque to drive the wheels 50. The control apparatus 212 receives the second torque signal, and outputs the second control signal. The second control signal causes the inverter circuit 211 to stop driving the induction motor 22, and the induction motor 22 outputs a zero torque. The powertrain 20 operates in the freewheeling state. Further, the electric vehicle 10 needs the powertrain 20 to re-output a torque to drive the wheels 50. The vehicle control unit 30 outputs the third torque signal, and the control apparatus 212 receives the third torque signal. In this case, because the power transistors of the inverter circuit 211 are already turned off, the inverter circuit needs to be restarted. If the inverter circuit 211 is directly started, an induced voltage on a stator winding causes a voltage difference between the stator winding of the induction motor 22 and the inverter circuit 211, and therefore an induced current flowing from the induction motor 22 to the inverter circuit 211 is generated, which has impact on the power transistors of the inverter circuit 211. Therefore, the control apparatus 212 first outputs the startup signal to control the inverter circuit 211 to generate the startup voltage, and then the control apparatus 212 outputs the third control signal. The inverter circuit 211 is started and drives the induction motor 22 to output a torque. The startup voltage can cause a voltage of the inverter circuit 211 to be relatively high. As a result, the voltage difference between the stator winding of the induction motor 22 and the inverter circuit 211 is greatly reduced, and the induced current that is prone to have impact on the power transistors of the inverter circuit 211 is not generated between the stator winding of the induction motor 22 and the inverter circuit 211. Therefore, the motor controller 21 provided in this application improves the power performance and driving comfort of the electric vehicle 10.

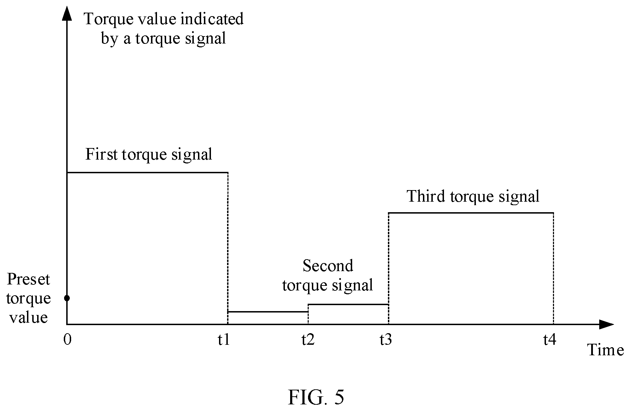

For example, FIG. 5 is a diagram of a time sequence in which the vehicle control unit 10 outputs three types of torque signals. As shown in the figure, the torque signals output by the vehicle control unit 10 are step signals.

In a time period from 0 to t1, the vehicle control unit 10 outputs a first torque signal. As shown in FIG. 5, a torque value indicated by the first torque signal is greater than a preset torque value. In this case, the powertrain 20 receives the first torque signal and operates in a drive state, and the induction motor 22 outputs a torque based on the torque value indicated by the first torque signal.

In a time period from t1 to t2 and a time period from t2 to t3, the vehicle control unit 10 outputs a second torque signal. As shown in the figure, a torque value indicated by the second torque signal is less than the preset torque value. In this case, the powertrain 20 receives the second torque signal and operates in a freewheeling state, the power transistors of the motor controller 21 are turned off, and the induction motor 22 outputs a zero torque.

In a time period from t3 to t4, the vehicle control unit 10 outputs a third torque signal. The power system 20 receives the third torque signal and enters a startup state, and the power transistor of the motor controller 21 changes from an off state to an on state. After the power transistor of the motor controller 21 is turned on, the motor controller 21 controls the induction motor 22 to output a torque based on a torque value indicated by the third torque signal.

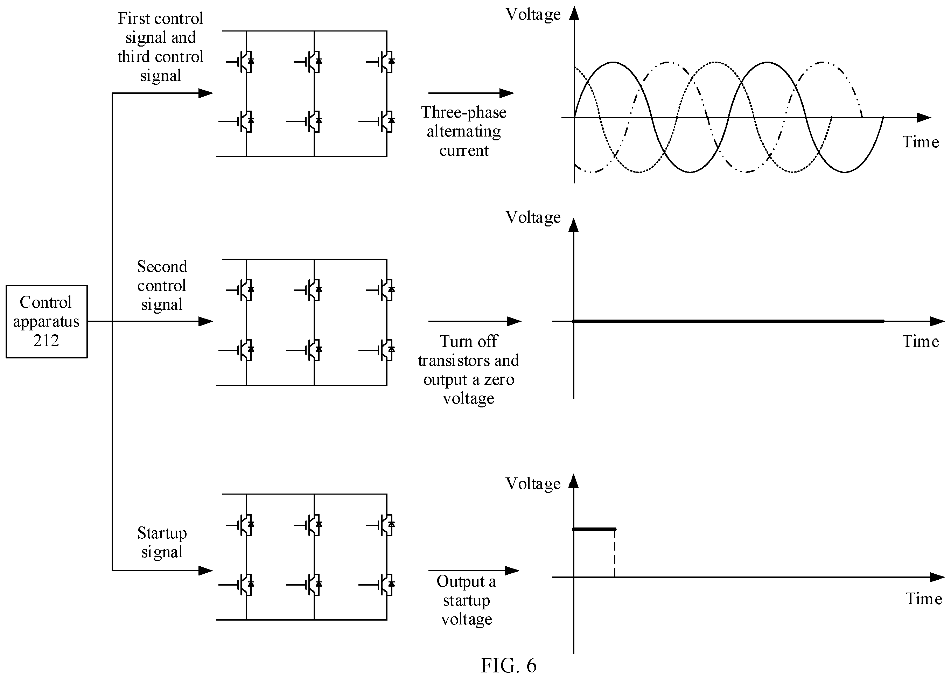

FIG. 6 is a diagram showing that the control apparatus 212 controls operation of the inverter circuit 211. As shown in FIG. 6, the control apparatus 212 outputs the first control signal and the third control signal. In response to the first control signal or the third control signal, the inverter circuit 211 outputs a three-phase alternating current to drive the induction motor 22. The control apparatus 212 outputs the second control signal. The inverter circuit 211 responds to the second control signal, the power transistors of the inverter circuit 211 are turned off, the inverter circuit does not output a drive current, and the induction motor 22 rotates with the wheels. The control apparatus 212 outputs the startup signal. The inverter circuit 211 responds to the startup signal, the startup voltage is generated at the bridge arm midpoints of the inverter circuit 211, to reduce a voltage difference between the stator winding of the induction motor 22 and the bridge arm midpoints of the inverter circuit 211 and therefore prevent an induced current from being generated between the stator winding of the induction motor 22 and the bridge arm midpoints of the inverter circuit 211.

In this embodiment of this application, an interval between the first control signal and the third control signal is greater than an interval between the first torque signal and the third torque signal. When receiving the third torque signal, the control apparatus does not immediately output the third control signal, but first outputs the startup signal and then outputs the third control signal. Therefore, duration of the startup signal is less than duration of the first control signal and duration of the third control signal.

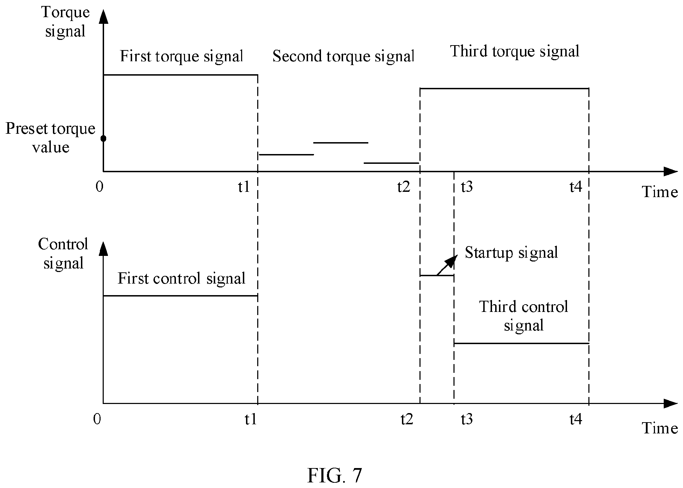

For example, FIG. 7 is a diagram showing that the vehicle control unit outputs a torque signal and the control apparatus 212 receives the torque signal from the vehicle control unit 10 and outputs a control signal and a startup signal.

In a time period from 0 to t1, the vehicle control unit 10 sends a first torque signal to the control apparatus 212, the control apparatus 212 receives the first torque signal and sends a first control signal to the inverter circuit 211, and the inverter circuit 211 outputs a drive current based on the first signal, to control the induction motor 22 to output a torque based on a torque value indicated by the first torque signal.

In a time period from t1 to t2, the vehicle control unit 10 sends a second torque signal to the control apparatus 212. A torque value indicated by the second torque signal is less than a preset torque value. The control apparatus 212 receives the second torque signal, the drive circuit 211 stops driving the induction motor 22, and the induction motor 22 outputs a zero torque.

In a time period from t2 to t4, the vehicle control unit 10 sends a third torque signal to the control apparatus 212, and the control apparatus 212 receives the first torque signal and sends a startup signal and a third control signal to the inverter circuit 211 in sequence. Specifically, in a time period from t2 to t3, the control apparatus 212 sends the startup signal to the inverter circuit 211, and a startup voltage is generated at bridge arm midpoints of power transistor bridge arms of the inverter circuit 211. Then, in a time period from t3 to t4, the control apparatus 212 sends the third control signal to the inverter circuit 211, and the inverter circuit 211 outputs a drive current based on the third torque signal, to control the induction motor 22 to output a torque based on a torque value indicated by the third torque signal.

It can be learned with reference to FIG. 7 that, because the control apparatus 212 needs to first output the startup signal and then output the third control signal after receiving the third torque signal, the interval between the first control signal and the third control signal is greater than the interval between the first torque signal and the third torque signal. As shown in FIG. 7, the interval between the first torque signal and the third torque signal is t2 - t1, but the interval between the first control signal and the third control signal is t3 - t1.

In an embodiment, the control apparatus 212 includes a storage unit 2123 and a drive unit 2124. The storage unit 2123 is configured to store a plurality of torque values and a plurality of current parameters of the induction motor 22. The plurality of torque values correspond to the plurality of current parameters respectively. The current parameter includes an amplitude and a phase angle of a three-phase alternating current. The drive unit 2124 is configured to adjust a duty cycle and a frequency of the first control signal based on a current parameter corresponding to the torque value indicated by the first torque signal, or adjust a duty cycle and a frequency of the third control signal based on a current parameter corresponding to the torque value indicated by the third torque signal.

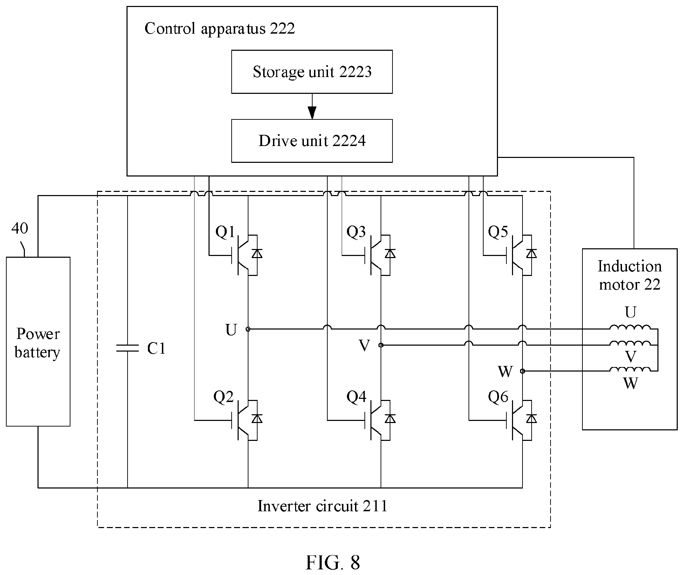

Specifically, as shown in FIG. 8, the storage unit 2123 stores the plurality of torque values and current parameters of the induction motor 22. The torque values are in a one-to-one correspondence with the current parameters. The torque values and the current parameters may be obtained by calibrating the induction motor 22. When the vehicle control unit 30 outputs the first torque signal to the control apparatus 212, the drive unit 2124 receives the first torque signal and determines the torque value indicated by the first torque signal, and the drive unit 2124 determines a current parameter that is in the storage unit 2123 and that corresponds to the torque value indicated by the first torque signal. The drive unit 2124 adjusts the duty cycle and the frequency of the first control signal based on the current parameter corresponding to the torque value indicated by the first torque signal, to cause a current parameter of a three-phase current output by the inverter circuit 211 to be the same as the current parameter corresponding to the torque value indicated by the first torque signal. Likewise, the drive unit 2124 adjusts the duty cycle and the frequency of the third control signal in a same manner based on the current parameter corresponding to the torque value indicated by the third torque signal, to cause a current parameter of a three-phase current output by the inverter circuit 211 to be the same as the current parameter corresponding to the torque value indicated by the third torque signal.

For example, the storage unit 2123 stores torque values T1, T2, and T3, and current parameter values I1, I2, and I3. T1 corresponds to I1, T2 corresponds to I2, and T3 corresponds to I3. The vehicle control unit 10 sends the first torque signal to the control apparatus 212. The torque value indicated by the first torque signal is T1. The drive unit adjusts the duty cycle and the frequency of the first control signal based on the current parameter I1 corresponding to the first torque value T1, to cause a parameter value of a three-phase current value output by the inverter circuit 211 to be the current parameter I1.

In response to at least one second torque signal, the motor controller 21 stops driving the induction motor 22, and the induction motor 22 rotates with the wheels.

In this embodiment of this application, in a process in which the motor controller 21 receives the at least one second torque signal, the induction motor 22 rotates with the wheels 50. As described above, the second torque signal is a zero torque signal, and the control apparatus outputs the second control signal in response to the second torque signal. The inverter circuit 212 responds to the second control signal, six power transistors of the inverter circuit 212 are turned off, the inverter circuit 212 no longer outputs a current and therefore no longer drives the induction motor 22, and the induction motor 22 does not output a torque, but only rotates with the wheels 50.

In an embodiment, the control apparatus 212 is configured to receive the first torque signal, the at least one second torque signal, and the third torque signal that are output in sequence by the vehicle control unit 30. At least one of the vehicle control unit 30 or the control apparatus 212 is configured to detect a vehicle speed. In response to that the vehicle speed is less than a preset vehicle speed during reception of the at least one second torque signal, the control apparatus 212 controls the inverter circuit 211 to re-drive the induction motor 22 to generate a torque.

Although the control apparatus 212 receives the second torque signal, if the vehicle speed of the electric vehicle 01 is less than the preset vehicle speed and the power transistors of the inverter circuit 211 are in the off state in this case, there is a gear rattle from the gear of the powertrain 20, and consequently, the NVH performance of the electric vehicle is affected. Therefore, in response to that the vehicle speed is less than the preset speed during reception of the at least one second torque signal, the control apparatus 212 controls the power transistors of the inverter circuit 211 to be turned on, to avoid the gear rattle from the powertrain 20 during traveling of the electric vehicle. As a result, the NVH performance and driving comfort of the electric vehicle 10 are improved.

For example, the preset speed is 20 km/h. In response to the second torque signal and a case in which the vehicle speed of the electric vehicle is less than 20 km/h, the control apparatus 212 controls the power transistor of the inverter circuit 211 to be turned on, and the inverter circuit 211 outputs a drive current to drive the induction motor 22 to output a torque.

In an embodiment, the duration of the startup signal is less than the duration of the first control signal and the duration of the third control signal. In a startup process of the motor controller 21, the power transistors of the inverter circuit 211 switch from the off state to an alternately-on state. Shorter duration of the startup process of the motor controller 21 indicates faster startup of the motor controller 21, and correspondingly a shorter response time for the induction motor 22 to output a torque, and better power performance and driving experience of the electric vehicle 10. Therefore, to ensure that the startup process is fast enough, the duration of the startup signal needs to be short enough. In this application, the duration of the startup signal is set to be less than the duration of the first control signal and the duration of the third control signal, to increase a startup speed of the motor controller.

In response to receiving the third torque signal in the process in which the induction motor 22 rotates with the wheels 50, the motor controller 21 first outputs the startup voltage, and then drives the induction motor 22 to drive the wheels 50.

In the process in which the induction motor 22 rotates with the wheels, the induction motor 22 does not output a torque, and the induction motor 22 is driven by the wheels. In the process in which the induction motor 22 rotates with the wheels 50, the vehicle control unit 30 determines, based on a driving condition of the electric vehicle 10 and a driving intention of a driver, that the powertrain 20 needs to be restarted to output a torque. In response to an instruction of the vehicle control unit 30, the motor controller 21 first outputs the startup voltage to reduce the voltage difference between the stator winding of the induction motor 22 and the bridge arm midpoints of the inverter circuit 211, and then controls the induction motor 22 to output a torque. The motor controller 21 in embodiments of this application first generates the startup voltage before driving the induction motor 22, to avoid the current impact on the power transistors of the motor controller 21 caused by the induced current generated by the induced voltage on the stator winding.

In an embodiment, the induction motor 22 rotates with the wheels 50 in a process in which the motor controller 21 outputs the startup voltage. In a process in which the motor controller 21 outputs a drive voltage, the motor controller 21 still does not drive the induction motor 22 to generate a torque. Therefore, the induction motor rotates with the wheels in this case. In an embodiment, a torque that the induction motor 22 is driven, by the inverter circuit 211 in the process in which the motor controller 21 outputs the startup voltage, to generate is less than the preset torque value. In the process in which the motor controller 21 outputs the startup voltage, the power transistor of the inverter circuit 211 switches from the off state to the on state. In this process, the inverter circuit does not output a drive current to drive the induction motor 22.

In an embodiment, in the startup process of the motor controller 21, a difference between a phase of a startup voltage of bridge arm midpoints of the three power transistor bridge arms and a phase of a voltage that is of the three phase windings of the induction motor 22 and that exists when the control apparatus 212 receives the third torque signal, and a difference between an amplitude of the startup voltage of the bridge arm midpoints of the three power transistor bridge arms and an amplitude of the voltage that is of the three phase windings of the induction motor 22 and that exists when the control apparatus 212 receives the third torque signal each are less than or equal to a preset threshold.

As described above, to avoid the current impact on the power transistors of the motor controller 21 caused by the induced current generated by the induced voltage on the stator winding of the induction motor 22 when the motor controller 21 is started, before the power transistor is turned on, the control apparatus 212 controls the power transistor bridge arms to first generate the startup voltage at the midpoints. Due to the startup voltage, an electric potential difference between a motor winding and the midpoints of the power transistor bridge arms is reduced, so that no excessive impulse current is generated when the power transistor is turned on. To eliminate the current impact of the motor controller 21 as much as possible, a difference between a phase of a startup voltage generated at bridge arm midpoints of the motor controller 21 and the phase of the voltage of the three phase windings of the induction motor 22, and a difference between an amplitude of the startup voltage generated at the bridge arm midpoints of the motor controller 21 and the amplitude of the voltage of the three phase windings of the induction motor 22 each are less than or equal to the preset threshold.

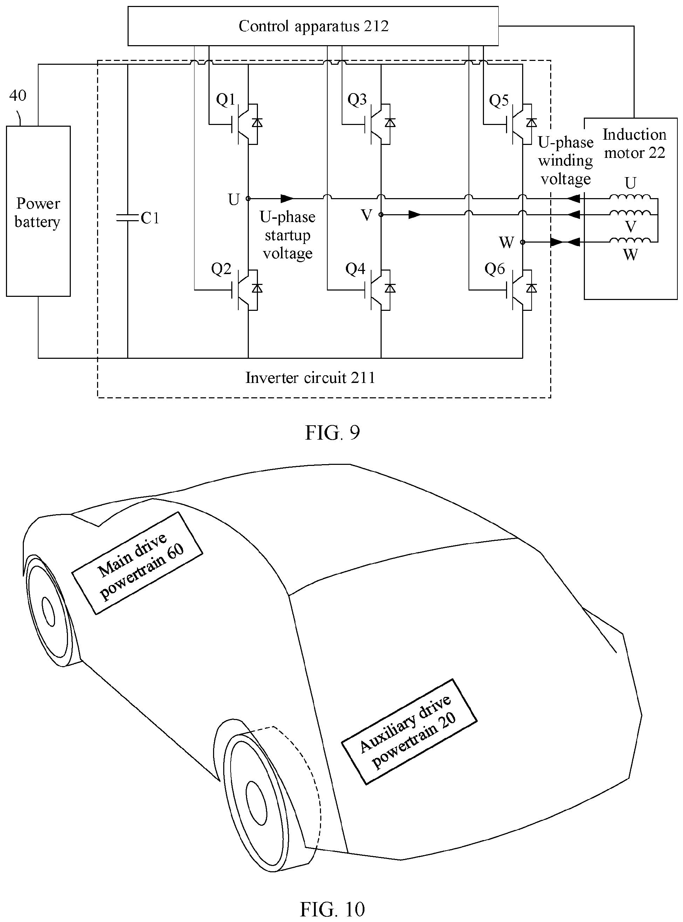

As shown in FIG. 9, there is a U-phase winding voltage on the U-phase winding of the induction motor 22, there is a V-phase winding voltage on the V-phase winding of the induction motor 22, and there is a W-phase winding voltage on the W-phase winding of the induction motor 22. The U-phase winding voltage, the V-phase winding voltage, and the W-phase winding voltage are induced voltages generated on the stator winding of induction motor through induction in a remaining magnetic field of the rotor. If the power transistor of the motor controller 21 is directly turned on, the induced voltage on the stator winding of the induction motor 22 causes the voltage difference between the stator winding and the bridge arm midpoints of the inverter circuit 211. Consequently, the induced current is generated under the action of the voltage difference and flows to the power transistor bridge arms of the motor controller 21. Therefore, the inverter circuit 211 responds to the startup signal, the U-phase bridge arm of the inverter circuit generates a U-phase start voltage, the V-phase bridge arm of the inverter circuit generates a V-phase start voltage, and the W-phase bridge arm of the inverter circuit generates a W-phase start voltage The U-phase startup voltage, the V-phase startup voltage, and the W-phase startup voltage can offset the U-phase winding voltage, the V-phase winding voltage, and the W-phase winding voltage respectively.

The U-phase power transistor bridge arm is used as an example. The midpoint of the U-phase power transistor bridge arm is connected to the U-phase winding of the induction motor 22. When two power transistors of the U-phase power transistor bridge arm are in the off state, an electric potential of the U-phase winding of the induction motor 22 is V1, and an electric potential of the midpoint of the U-phase power transistor bridge arm is 0. Before the two power transistors of the U-phase bridge arm are turned on, the control apparatus 212 controls the inverter circuit 211 to generate a voltage with an amplitude of V2 at the midpoint of the U-phase bridge arm. A difference between a phase of V1 and a phase of V2, and a difference between an amplitude of V1 and an amplitude of V2 each are less than or equal to the preset threshold.

The control apparatus 212 stops outputting the first control signal, and the power transistor of the inverter circuit 211 changes from the on state to the off state. In this case, the control apparatus 212 calculates, based on turn-off duration of the power transistor in the inverter circuit 211 and the current of the induction motor 22 that exists when the power transistor of the inverter circuit is turned off, a restart voltage required for restarting the inverter circuit 211. When the drive unit 2124 turns on the power transistor of the inverter circuit 211 again, the drive unit 2124 adjusts the frequency and the duty cycle of the startup signal based on the restart voltage obtained through calculation before the power transistor is turned off, so that the voltage of the motor controller is equal to the restart voltage.

In response to that the control apparatus 212 outputs the first control signal to the inverter circuit 211, the bridge arm midpoints of the plurality of power transistor bridge arms of the inverter circuit 211 outputs an alternating current to drive the induction motor to generate the first torque. In response to that the control apparatus 212 outputs the second control signal to the inverter circuit 211, and the upper-bridge-arm power transistors and the lower-bridge-arm power transistors of the plurality of power transistor bridge arms of the inverter circuit 211 are turned off. In response to that the control apparatus 212 outputs the startup signal to the inverter circuit 211, the startup voltage is generated at the bridge arm midpoint of the plurality of power transistor bridge arms of the inverter circuit 211. A difference between the startup voltage and the winding voltage of the induction motor that exists when the control apparatus 212 receives the third torque signal is less than or equal to the preset threshold. In response to that the control apparatus 212 outputs the third control signal to the inverter circuit 211, the inverter circuit 211 outputs an alternating current to drive the induction motor to generate the third torque.

In an embodiment, the drive unit 2124 is configured to adjust a frequency and a duty cycle of the startup signal based on a current that is of the induction motor 22 and that exists when the control apparatus 212 stops outputting the first control signal, the turn-off duration of the power transistor in the inverter circuit 211, and a rotation speed that is of the induction motor 22 and that exists when the control apparatus 212 receives the third torque signal.

The induced voltage on the stator winding of the induction motor 22 is determined by the current that is of the induction motor 22 and that exists when the control apparatus 212 stops outputting the first control signal, the turn-off duration of the power transistor of the inverter circuit 211, the rotation speed that is of the induction motor 22 and that exists when the control apparatus 212 receives the third torque signal, and the like. To maximally offset the induced voltage on the stator winding of the induction motor 22, the phase and the amplitude of the startup voltage need to be as close as possible to those of the induced voltage on the stator winding of the induction motor 22. Therefore, in this embodiment of this application, the drive unit 2124 determines the frequency and the duty cycle of the startup signal based on the current that is of the induction motor 22 and that exists when the control apparatus 212 stops outputting the first control signal, the turn-off duration of the power transistor in the inverter circuit 211, and the rotation speed that is of the induction motor 22 and that exists when the control apparatus 212 receives the third torque signal, to adjust a magnitude of the startup voltage.

In this embodiment of this application, the motor controller 21 is configured to adjust the startup voltage based on the rotation speed that is of the induction motor 22 and that exists when the control apparatus 212 receives the third torque signal. A magnitude of the induced voltage on the stator winding of the induction motor 22 is related to the rotation speed that is of the induction motor 22 and that exists when the control apparatus 212 receives the third torque signal. A higher rotation speed that is of the induction motor 22 and that exists when the control apparatus 212 receives the third torque signal indicates a higher induced voltage on the stator winding of the induction motor 22, and correspondingly, a higher startup voltage required by the motor controller 21. Therefore, the motor controller 21 adjusts the startup voltage based on the rotation speed that is of the induction motor 22 and that exists when the control apparatus 212 receives the third torque signal.

FIG. 10 is a diagram of an electric vehicle according to an embodiment of this application. As shown in FIG. 10, an electric vehicle 01 includes wheels 50, a vehicle control unit 10, a main drive powertrain 60, and an auxiliary drive powertrain 20. The auxiliary drive powertrain 20 includes a motor controller 21 and an induction motor 22.

The vehicle control unit 10 or the motor controller 21 is configured to detect a vehicle speed of the vehicle. The motor controller 21 responds to at least one second torque signal and a case in which the vehicle speed is greater than a preset speed. In this case, the motor controller 21 stops driving the induction motor, and the induction motor rotates with the wheels.

During traveling of the electric vehicle 01, in most cases, the main drive powertrain provides power for the electric vehicle 01, and the auxiliary drive powertrain rotates with the wheels 50. In a few cases, the main drive powertrain and the auxiliary drive powertrain jointly provide power. The electric vehicle 01 provided in this embodiment of this application determines a working status of the drive powertrain based on a torque signal sent by the vehicle control unit 10 to the powertrain 20 and the vehicle speed of the electric vehicle 01. Specifically, when the motor controller 21 responds to the second torque signal and a case in which the vehicle speed of the electric vehicle 01 is greater than the preset speed, power transistors of the motor controller 21 are turned off, and there is no gear rattle from a gear of the powertrain 20. In this case, the motor controller 21 receives the second torque signal and controls the induction motor 22 to output a zero torque, to cause the powertrain 20 to operate in a freewheeling state. The motor controller 21 responds to the second torque signal and a case in which the vehicle speed of the electric vehicle 01 is less than the preset speed. In this case, when the power transistors of the motor controller 21 are turned off, there is a gear rattle from the gear of the powertrain 20. To improve NVH performance of the electric vehicle 10, the motor controller 21 drives the induction motor 22. According to the electric vehicle provided in this application, NVH performance and driving comfort of the electric vehicle can be improved.

Further, an embodiment of this application provides a control method for controlling an inverter circuit of a motor controller. The inverter circuit is configured to drive an induction motor. For a specific structure of the inverter circuit and a specific structure of the drive motor, refer to the structure of the inverter circuit 211 and the structure of the induction motor 22.

The control method for controlling the inverter circuit of the motor controller includes:
receiving torque signals, where the torque signals include a first torque signal, at least one second torque signal, and a third torque signal that are in sequence and spaced apart, a torque value indicated by the first torque signal and a torque value indicated by the third torque signal are greater than a preset torque value, and a torque value indicated by the at least one second torque signal is less than the preset torque value;
outputting a first control signal in response to the first torque signal, where the first control signal controls the inverter circuit to drive the induction motor to generate a torque;
outputting a second control signal in response to the at least one second torque signal, where the second control signal controls the inverter circuit to stop driving the induction motor; and
in response to the third torque signal, outputting a startup signal and a third control signal in sequence, where the startup signal is used to control a startup voltage of the inverter circuit, and the third control signal is used to control the inverter circuit to drive the induction motor to generate a torque.

According to the method for controlling the inverter circuit of the motor controller provided in this application, when the inverter circuit is started, the startup signal is first output to control the inverter circuit to generate the startup voltage. The startup voltage can offset an induced voltage on a stator winding of the induction motor. Under the action of the startup voltage, an impulse current is weakened. There is no longer impact in a startup process of the inverter circuit, and a startup speed is greatly increased. Then, the third control signal is output, and the inverter circuit is started and drives the induction motor to output the torque. Therefore, according to the method for controlling the inverter circuit of the motor controller provided in this application, power performance and driving comfort of the electric vehicle are improved.

In an embodiment, a torque that the induction motor is driven, by the inverter circuit in a process in which the inverter circuit outputs the startup voltage, to generate is less than the preset torque value.

In an embodiment, duration of the startup signal is less than duration of the first control signal and duration of the third control signal. To ensure that the startup process is fast enough, the duration of the startup signal needs to be short enough. According to the control method in this application, the duration of the startup signal is set to be less than the duration of the first control signal and the duration of the third control signal, to increase a startup speed of the motor controller.

In an embodiment, the duration of the startup signal is less than the duration of the first control signal and the duration of the third control signal.

In an embodiment, an interval between outputting the first control signal and outputting the third control signal is greater than an interval between receiving the first torque signal and receiving the third torque signal. When the third torque signal is received, the third control signal is not immediately output, but the startup signal is first output and then the third control signal is output. Therefore, the interval between outputting the first control signal and outputting the third control signal is greater than the interval between receiving the first torque signal and receiving the third torque signal.

A person of ordinary skill in the art may understand that various numbers such as "first" and "second" in this application are merely used for differentiation for ease of description, and are not intended to limit the scope and sequence of embodiments of this application. Execution sequences of processes should be determined based on functions and internal logic of the processes.

The person of ordinary skill in the art may be aware that, in combination with the examples described in embodiments disclosed in this specification, modules may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

## Claims

1. A motor controller, wherein the motor controller comprises an inverter circuit and a control apparatus, the control apparatus controls the inverter circuit to output an alternating current to drive an induction motor, and the control apparatus is configured to:
receive a first torque signal, at least one second torque signal, and a third torque signal, wherein a torque value indicated by the first torque signal and a torque value indicated by the third torque signal are greater than a preset torque value, and a torque value indicated by the at least one second torque signal is less than the preset torque value;
output a first control signal, wherein the first control signal is used to control the inverter circuit to drive the induction motor to generate a torque, and the first control signal is in response to the first torque signal;
output a second control signal, wherein the second control signal is used to control the inverter circuit to stop driving the induction motor, and the second control signal is in response to receiving the at least one second torque signal; and
output a startup signal, and output a third control signal after outputting the startup signal, wherein the startup signal is used to control a startup voltage of the inverter circuit, and the third control signal is used to control the inverter circuit to drive the induction motor to generate a torque.

2. The motor controller according to claim 1, wherein the inverter circuit is configured to: in a process in which the motor controller outputs the startup voltage, drive the induction motor to generate a torque whose value is less than the preset torque value.

3. The motor controller according to claim 1 or 2, wherein duration of the startup signal is less than duration of the first control signal and duration of the third control signal.

4. The motor controller according to any one of claims 1 to 3, wherein a time interval between the motor controller outputting the first control signal and the motor controller outputting the third control signal is greater than a time interval between the motor controller receiving the first torque signal and the motor controller receiving the third torque signal.

5. The motor controller according to any one of claims 1 to 4, wherein the inverter circuit comprises a plurality of power transistor bridge arms, the induction motor comprises a plurality of phase windings, each power transistor bridge arm comprises an upper-bridge-arm power transistor and a lower-bridge-arm power transistor, two ends of each power transistor bridge arm are configured to receive a direct current, a bridge arm midpoint of each power transistor bridge arm is configured to connect to one phase winding of the induction motor, and in response to the first control signal, the plurality of power transistor bridge arms are configured to output an alternating current through bridge arm midpoints to drive the induction motor to generate a first torque;
in response to the second control signal, the plurality of power transistor bridge arms are configured to be turned off through upper-bridge-arm power transistors and lower-bridge-arm power transistors;
in response to the startup signal, the plurality of power transistor bridge arms are configured to generate the startup voltage through the bridge arm midpoints, wherein a difference between the startup voltage and a winding voltage that is of the induction motor and that exists when the control apparatus receives the third torque signal is less than or equal to a preset threshold; and
in response to the third control signal, the inverter circuit outputs an alternating current to drive the induction motor to generate a third torque.

6. The motor controller according to any one of claims 1 to 5, wherein the inverter circuit comprises three power transistor bridge arms, the induction motor comprises three phase windings, and a difference between a phase of a startup voltage of bridge arm midpoints of the three power transistor bridge arms and a phase of a voltage that is of the three phase windings of the induction motor and that exists when the control apparatus receives the third torque signal, and a difference between an amplitude of the startup voltage of the bridge arm midpoints of the three power transistor bridge arms and an amplitude of the voltage that is of the three phase windings of the induction motor and that exists when the control apparatus receives the third torque signal each are less than or equal to the preset threshold.

7. The motor controller according to claim 6, wherein the motor controller further comprises a drive unit, the drive unit is configured to adjust a frequency and a duty cycle of the startup signal based on a current that is of the induction motor and that exists when the control apparatus stops outputting the first control signal, turn-off duration of the power transistor in the inverter circuit, and a rotation speed that is of the induction motor and that exists when the control apparatus receives the third torque signal.

8. A powertrain, wherein the powertrain comprises an induction motor and a motor controller, the induction motor is configured to drive wheels to rotate or rotate with the wheels, the motor controller is configured to receive torque signals, the torque signals comprise a first torque signal, at least one second torque signal, and a third torque signal that are in sequence and spaced apart, a torque value indicated by the first torque signal and a torque value indicated by the third torque signal are greater than a preset torque value, a torque value indicated by the at least one second torque signal is less than or equal to the preset torque value, and the motor controller is configured to:
in response to the first torque signal, drive the induction motor to drive the wheels;
in response to the at least one second torque signal, stop driving the induction motor, wherein the induction motor rotates with the wheel; and
in response to receiving the third torque signal in a process in which the induction motor rotates with the wheels, first output a startup voltage, and then drive the induction motor to drive the wheels.

9. The powertrain according to claim 8, wherein the induction motor rotates with the wheels in a process in which the motor controller receives the at least one second torque signal.

10. The powertrain according to claim 9, wherein the induction motor rotates with the wheels in a process in which the motor controller outputs the startup voltage.

11. The powertrain according to claim 10, wherein the induction motor comprises a rotation speed detection module, the rotation speed detection module is configured to detect a rotation speed of the induction motor, the motor controller is configured to adjust the startup voltage based on a rotation speed that is of the induction motor and that exists when the control apparatus receives the third torque signal.

12. A vehicle, wherein the vehicle comprises wheels, a vehicle control unit, and the powertrain according to any one of claims 8 to 11, and the vehicle control unit or the motor controller is configured to detect a vehicle speed of the vehicle.

13. A control method for controlling an inverter circuit of a motor controller, wherein the inverter circuit is configured to drive an induction motor, and the control method comprises:
receiving torque signals, wherein the torque signals comprise a first torque signal, at least one second torque signal, and a third torque signal that are in sequence and spaced apart, a torque value indicated by the first torque signal and a torque value indicated by the third torque signal are greater than a preset torque value, and a torque value indicated by the at least one second torque signal is less than the preset torque value;
outputting a first control signal in response to the first torque signal, wherein the first control signal controls the inverter circuit to drive the induction motor to generate a torque;
outputting a second control signal in response to the at least one second torque signal, wherein the second control signal controls the inverter circuit to stop driving the induction motor; and
in response to the third torque signal, outputting a startup signal and a third control signal in sequence, wherein the startup signal is used to control a startup voltage of the inverter circuit, and the third control signal is used to control the inverter circuit to drive the induction motor to generate a torque.

14. The method according to claim 13, wherein a value of a torque that the induction motor is driven, by the inverter circuit in a process in which the inverter circuit outputs the startup voltage, to generate is less than the preset torque value.

15. The method according to claim 13 or 14, wherein duration of the startup signal is less than duration of the first control signal and duration of the third control signal.

16. The method according to any one of claims 13 to 15, wherein an interval between outputting the first control signal and outputting the third control signal is greater than an interval between receiving the first torque signal and receiving the third torque signal.
